# EUROPEAN PATENT APPLICATION

(11) **EP 1 304 224 A1**
(43) Date of publication of application: **23.04.2003**
(21) Application number: 01308906.5
(22) Date of filing: 19.10.2001
(51) Int. Cl.: B41J 2/16

(54) **Method of forming a three dimensional shape**

(71) Applicant: TONEJET CORPORATION PTY LTD, Eastwood, S.A. 5063 (AU)
(72) Inventor: Mace, Daniel Richard, Histon, Cambridge CB4 9LJ (GB); Paine, Richard, Cherryhinton, Xambridge CB1 9PB (GB); Mikulin, Dominic Josef, Melbourn, Herts SG8 6DS (GB)
(74) Representative: Brunner, Michael John

(57) **Abstract**

A method of forming a three dimensional shape, the method comprising the steps of: forming a master of the desired shape; forming, using the master, a mould (15) of the desired shape, inserting, into the mould (15), a support structure (16) to create a chamber (8) in which the desired shape can then be formed; introducing, into the chamber (8), casting material (14) to form the desired shape; allowing the casting material (14) to set; and removing the mould (5).

## Description

This invention relates to a method for forming a three dimensional shape and, in particular, to forming complex objects such as printheads.

It is desirable in many different fields for complex three dimensional shapes to be quickly and easily formed such that low cost and high volume production can be achieved. It is also desirable for the formation of these objects to be repeatable, i.e. there is a minimum of variation between each formation of the desired object.

In particular, in the field of printing, it is desirable that individual printheads can be replicated accurately in order that the printing characteristics of each tip of a printhead is the same. In this way, accurate, controllable printing can be attained at a minimum cost.

As a typical example of known methods of making a printhead, EP0844087A discloses a method of manufacturing a printhead by creating, in surfaces on a head tip on which a conductor layer of, for example, Cu or Ni has already been formed by sputtering or plating, ink channel grooves by using a machining blade such as a dicing saw. Such a process is time consuming and therefore not practical as a mass production method as each feature of the printhead must be machined individually and sequentially. In particular, as the typical size for the grooves is in the order of 50-100µm, it is very difficult to machine grooves accurately and sufficiently quickly on such a small scale.

It is an object of the present invention to provide a method which achieves the above aims.

According to the present invention, there is provided a method of forming a three dimensional shape, the method comprising the steps of:
forming a master of the desired shape;
forming, using the master, a mould of the desired shape;
inserting, into the mould, a support structure to create a chamber in which the desired shape can be formed;
introducing, into the chamber, casting material to form the desired shape;
allowing the casting material to set; and
removing the mould.

The three dimensional shape is preferably a printhead.

The step of inserting the support structure into the mould may be carried out either before or after the casting material is introduced into the mould.

The casting material may be injected into one end of the chamber and extracted from the opposite end of the chamber. Additionally and/or alternatively, the support structure may be provided with at least one inlet to the chamber through which the casting material can be introduced and may also be provided with at least one outlet from the chamber through which air from the chamber is expelled as the casting material is introduced. The pressure at the outlet from the chamber may be lower than that at the inlet, thereby creating a moderate vacuum, in order to draw the casting material into the chamber and ensure that all of the fine features in the mould are fully filled. Alternatively the casting process may be carried out in a vacuum or at least a partial vacuum.

The mould may be formed from any suitable material, in particular, from silicone. The mould may be formed by pouring a low viscosity silicone around the master replica of the desired shape or, alternatively, the master may be inserted into high viscosity silicone. It is important that the silicone is mixed and de-gassed during formation of the mould.

The master may be formed from a ceramic, a metal, a semi-conductor material or a laser machined polymer and should retain the desired shape under the range of operating conditions, including temperature, pressure and humidity.

Preferably, the casting material is one of an epoxy, a polyurethane, an acrylic or another liquid polymer. The viscosity of the casting material may be dependent upon the size of chamber it is desired to fill.

The support structure may be a laminate of machined and solid component layers. The inlet and the outlet may be provided in different layers of the laminate, in such a way that the casting material can be injected, under pressure, through the support structure and can readily fill the available space in the chamber.

When injecting at one end of the chamber and extracting from the opposite end of the chamber, a relatively large force is required to push the casting material from one end of the printhead to the other. By injecting the casting material through the support component as described above, this problem is overcome and the pressure at which the casting material is injected can be reduced. Furthermore the introduction of the casting material into the chamber is not limited by the length of the printhead.

Injecting through the support structure and/or under at least a partial vacuum is particularly beneficial when casting printheads which have fine features, as the casting material can be injected into problem regions of the mould which would otherwise suffer from poor detailing or even trapped air pockets. Furthermore, it would be possible to cast printheads having an aspect ratio of about 6:1, as compared with shapes traditionally cast having an aspect ratio of typically 1:1.

The support structure may be formed from a ceramic and may include one or more surface features to which the material to be cast can key. For example, slots may be provided into which the cast material can flow during casting. Alternatively or additionally, protrusions around which the casting material can flow when injected could be formed on the support structure.

Preferably, the mould is treated such that it is stable, i.e., there is no, or at least no appreciable, additional shrinkage of the mould once it has been formed in order to ensure that very repeatable castings can be achieved.

One example of the present invention will now be described with reference to the accompanying drawings in which:
Figure 1 is a schematic longitudinal cross section through an apparatus for forming a three dimensional shape by the method of the present invention;
Figure 2 is a schematic cross section through one example of a casting section in the apparatus of Figure 1;
Figure 3 is a further example of casting section which could be used in the present invention;
Figure 4 is a front view of the support structure of Figure 3; and
Figure 5 is a schematic cross section through one example of the casting section in the apparatus of Figure 1;
Figure 6 is a view from the right hand side of Figure 5.

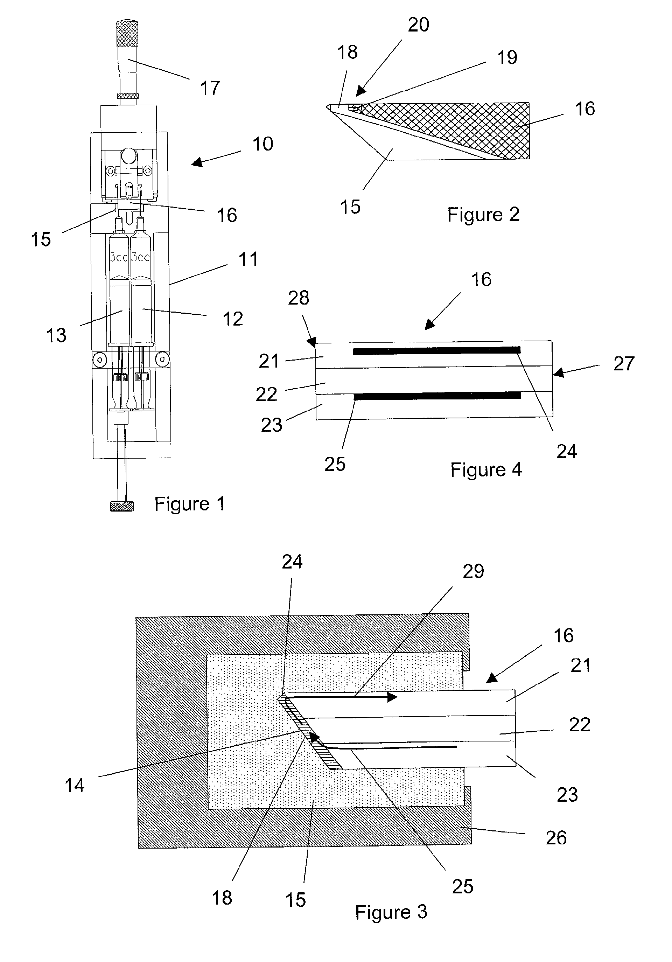

As can be seen in Figure 1, an apparatus 10 for casting printheads comprises a body 11 to which an injector 12 and an extractor 13 are mounted. The injector 12 and extractor 13 respectively supply casting material 14 to and remove casting material 14 from a chamber 18 (see Figure 2) in which the desired three dimensional shape, in this case a printhead, is to be formed. The chamber is formed between a silicone mould 15 and a ceramic support tile 16. The apparatus 10 also includes a means 17 by which the depth of the ceramic support tile 16 in the mould 15 can be controlled.

Turning now to Figure 2, the ceramic support tile 16 and the silicone mould 15 are spaced by a relatively small distance to provide a chamber 18 into which casting material 14 can be injected under pressure. The ceramic support tile is provided with a slot 19 in its narrow end portion 20 and the casting material 14 can, during injection, enter the slot 19, such that the final cast product is keyed on to the support structure 16. Whilst only a single slot 19 is shown in the Figures, it should be appreciated that more than one slot could be provided or, in fact, the same effect could be achieved by the provision of protrusions extending from the surface of the support tile 16.

In Figure 3, an alternative form of support structure 16 can be seen. The support structure 16 comprises three lamina 21, 22, 23, stacked one above the other. The central laminar 22 is solid and the upper laminar 21 and lower laminar 23 are provided with passageways (not shown), through which casting material 14 can be passed, and have a drain 24 and a feed 25 respectively. The support structure is located within the silicone mould 15, which in turn is surrounded by a metal casing 26 which forms part of the body 11 of the apparatus 10. In Figure 3, the chamber 18 is filled with the casting material 14 to form the desired shape.

Figure 4 shows a front view of the support tile 16 and, from this figure, it can be clearly seen how the outlet 24 and inlet 25 extend over a significant proportion of the total length of the support structure such that the casting material 14 has only to follow the path indicated by arrow 29 in Figure 3, rather than having to travel from one end 27 to the other end 28 of the chamber 16. In this way, the pressure required to inject the casting material 14 can be reduced.

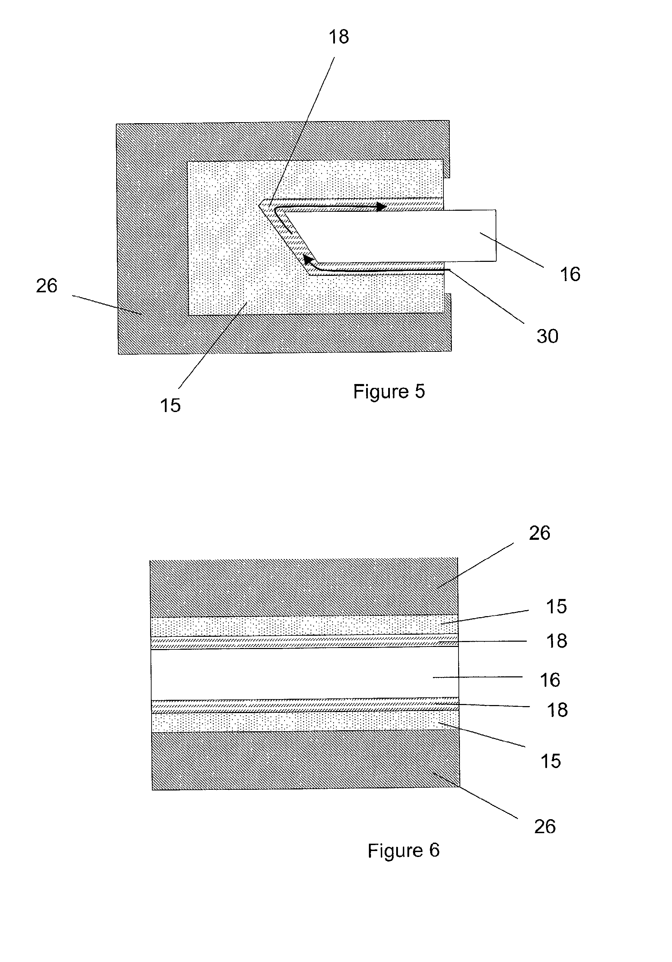

An alternative arrangement is shown in Figures 5 and 6 in which like parts are provided with the same reference numerals. In this arrangement, it can be seen how the support tile 16 is located in the central portion of the mould 15. The casting material is injected and extracted around the support tile 16, as indicated by arrows 30. This arrangement is particularly effective when the injection and extraction of the casting material is carried out in a vacuum.

A yet further alternative arrangement for the formation of a three dimensional shape is for the mould to be filled with the casting material, preferably an epoxy, under vacuum, to prevent air being trapped in the fine features of the mould, and then to lower the support structure into the correct position within the mould to form the desired shape.

## Claims

1. A method of forming a three dimensional shape, the method comprising the steps of:
forming a master of the desired shape;
forming, using the master, a mould (15) of the desired shape;
inserting, into the mould (15), a support structure (16) to create a chamber (8) in which the desired shape can then be formed;
introducing, into the chamber (8), casting material (14) to form the desired shape;
allowing the casting material (14) to set; and
removing the mould (15).

2. A method according to claim 1, wherein the three dimensional shape is a printhead.

3. A method of forming a printhead, the method comprising the steps of:
forming a master of the printhead;
forming, using the master, a mould (15) of the desired shape;
inserting, into the mould (15), a support structure (16) to create a chamber (8) in which the printhead can then be formed;
introducing, into the chamber (8), casting material (14) to form the printhead;
allowing the casting material (14) to set; and
removing the mould (8).

4. A method according to any one of the preceding claims, wherein the step of inserting the support structure (16) is carried out after the step of introducing the casting material (14).

5. A method according to any one of claims 1 to 3, wherein the step of inserting the support structure (16) is carried out before the step of introducing the casting material (14).

6. A method according to claim 5, wherein the support structure (16) has an inlet (25) to the chamber (8) through which the casting material (14) is introduced and an outlet (24) from the chamber (8) through which air from the chamber (8) is expelled.

7. A method according to any one of the preceding claims, wherein the casting material (14) is injected into one side of the chamber (8) and extracted from the opposite side.

8. A method according to any one of the preceding claims, wherein the mould (15) is formed from silicone.

9. A method according to any one of the preceding claims, wherein the master is formed from a ceramic, a metal, a semi-conductor material or a laser machined polymer.

10. A method according to any one of the preceding claims, wherein the casting material (14) is one of an epoxy, a polyurethane or an acrylic.

11. A method according to any one of the preceding claims, wherein the support structure (16) is formed from a ceramic.

12. A method according to any one of the preceding claims, wherein the support structure (16) is formed with features (19) to which the cast material (14) can key.

13. A method according to any one of the preceding claims, wherein the mould (15) is treated to ensure that it is stable.

14. A method according to any one of the preceding claims, wherein the mould (15) is placed in a vacuum chamber prior to injection of the casting material (14).

15. A method according to any one of the preceding claims when not dependent upon claim 6, wherein the support structure (16) is in the centre of the mould (15) and the casting material (14) is injected around the support structure (16).
